# EUROPÄISCHE PATENTSCHRIFT

(11) **EP 1 558 670 B1**
(45) Veröffentlichungstag und Bekanntmachung des Hinweises auf die Patenterteilung: **30.08.2006**
(21) Anmeldenummer: 03779861.8
(22) Anmeldetag: 06.11.2003
(51) Int. Cl.: C08J 3/03, C08L 83/08

(54) **HOCHKONZENTRIERTE ÖL-IN-WASSER-EMULSIONEN VON SILICONEN**
HIGHLY CONCENTRATED OIL-IN-WATER SILICONE EMULSIONS
EMULSIONS HUILE DANS EAU HAUTEMENT CONCENTREES DE SILICONES

(30) Priorität: 14.11.2002 DE 10253044
(43) Veröffentlichungstag der Anmeldung: 03.08.2005
(73) Patentinhaber: Wacker Chemie AG, 81737 München (DE)
(72) Erfinder: SCHNEIDER, Otto, 84489 Burghausen (DE); HOHBERG, Thomas, 33699 Bielefeld (DE)
(74) Vertreter: Fritz, Helmut
(86) Internationale Anmeldenummer: PCT/EP2003/012430
(87) Internationale Veröffentlichungsnummer: WO 2004/044036

(56) Entgegenhaltungen:
- DE-A- 19 517 346
- US-A- 4 182 682
- US-A- 5 000 861
- US-A- 5 852 110
- US-B1- 6 409 934

## Beschreibung

Die Erfindung betrifft hochkonzentrierte Öl-in-Wasser-Emulsionen von Si, O, C, H enthaltenden Organopolysiloxanen, die desweiteren die Elemente N und/oder S enthalten ,mit einem pH-Wert von mindestens 7,5 und ein Verfahren zur Herstellung von Emulsionen mit enger Teilchengrößenverteilung.

Emulsionen von Siliconen werden seit Jahrzehnten in großen Mengen hergestellt und gehandelt.

Emulsionen sind disperse Systeme von zwei oder mehreren miteinander nicht mischbaren Flüssigkeiten. Bekannte Klassen von Emulsionen sind die Mikro- und Makroemulsionen, wobei noch zwischen Öl-in-Wasser- und Wasser-in-Öl-Emulsionen unterschieden wird.

Stand der Technik ist, in Wasser nicht mischbare Stoffe, z. B. Siliconöle, zusammen mit einem oder mehreren Emulgatoren in Wasser stabil in kleine Tröpfchen zu zerteilen. Gegebenenfalls werden der Emulsion ein Konservierungsmittel sowie weitere Zusätze zugesetzt.

Hochkonzentrierte Emulsionen, d.h. Emulsionen, die mehr als 40 % Siloxan enthalten, sind oftmals Wasser-in-Öl-Emulsionen (W/O-Emulsionen). Diese W/O-Emulsionen sind jedoch nicht wasserverdünnbar und somit für technische Anwendungen nicht vorteilhaft. Vorteilhaft sind hochkonzentrierte Öl-in-Wasser-Emulsionen, die sofort mit Wasser weiter verdünnt werden können.

Es ist bekannt, dass insbesondere bei aminofunktionellen Siloxanemulsionen der Zusatz von Säure bzw. die zumindest teilweise Überführung der Aminogruppen in Ammoniumionen die Emulsionsstabilität erheblich verbessert, bzw. bei vielen Emulsionen zwingend erforderlich ist um eine für den Verkauf ausreichende Lagerstabilität zu erhalten. Dies gilt insbesondere dann, wenn höhere Temperaturen im Bereich von 35-50 °C bei der Lagerung nicht ausgeschlossen werden können. Ferner ist der pH-Wert, wie in den zitierten Patenten beschrieben, auch für eine ungestörte Anwendung wichtig. Die bekannten Aminosiloxan-Emulsionen werden bei pH-Werten > 7 instabil, und es scheidet sich Siliconöl ab, was zu unerwünschten Siliconflecken auf dem Textil führt. Dies ist beispielsweise bekannt aus DE 196 52 524 A1 und DE 100 04 321 A1.

Eine Konsequenz daraus ist nicht zuletzt aus der Tatsache ersichtlich, dass bei praktisch allen im Markt vertriebenen Siloxanemulsionen vorhandene Aminogruppen zumindest teilweise mit Säure in Ammoniumgruppen überführt vorliegen.

In beipielsweise EP 417 047 A, EP 459 821 und EP 404 027 sind Mikro- oder Makroemulsionen von Aminosiloxanen beschrieben, wobei stets mit Säure und ggfs. weiteren, stabilisierenden Zusätzen gearbeitet wird. Ferner sind Emulsionen von Aminosiloxan bekannt, wobei darauf hingewiesen wird, dass das Aminosiloxan teilweise in Salzform vorliegt, was ein indirekter Hinweis auf die Mitverwendung von Säure ist. Teilversalzte Aminosiloxane sind beispielsweise beschrieben in DE 4 004 946, wobei aus den Ausführungs-Beispielen klar hervorgeht, dass Säure eingesetzt wird.

Emulsionen von stickstoffhaltigen Siloxanen, die ohne Säure, jedoch mit geringem Siloxangehalt in der Emulsion hergestellt werden, sind beispielsweise beschrieben in DE 3 842 471; hier handelt es sich um eine Amidosiloxanmikroemulsion mit einem Siloxangehalt von 15%.

Obwohl viele Argumente wie verringerte Transport- und Lagerhaltungskosten für die Verwendung möglichst konzentrierter Emulsionen sprechen, liegt der Festgehalt von im Markt vertriebenen Siloxanmakroemulsionen typischerweise deutlich unter 50%. Dies ist darauf zurückzuführen, dass höher konzentrierte Siloxanemulsionen zwar mit den bestehenden Techniken herstellbar sind, jedoch eine derart hohe Viskosität aufweisen, bzw. typischerweise während der Lagerung einen derartigen Anstieg der Viskosität zeigen, dass sie für den überwiegenden Teil der Anwendungen, die gute Fließfähigkeit und einfache Verdünnbarkeit ohne aufwändige technische Hilfsmittel erfordern, nicht geeignet sind.

Dass hochkonzentrierte Emulsionen oftmals sehr hochviskos, und damit praktisch nicht mehr handhabbar sind, ist aus DE 198 35 227 A1 zu entnehmen.

Es ist deshalb von Interesse, hochkonzentrierte Emulsionen herzustellen, die nicht durch Zusätze in der gewünschten Dünnflüssigkeit erhalten werden. Ferner ist es von besonderem Interesse, hochkonzentrierte, dünnflüssige, stabile Emulsionen bereitzustellen, die nur einen geringen Emulgatoranteil enthalten.

Gegenstand der Erfindung sind hochkonzentrierte Öl-in-Wasser-Emulsionen von Organopolysiloxanen, welche
(A) mindestens 45 Gew.-% Organopolysiloxan, das neben den Elementen Si, O, C, H auch das Element N enthält,
(B) Emulgator und
(C) Wasser enthalten,
wobei die hochkonzentrierten Emulsionen einen pH-Wert von mindestens 7,5 und eine Viskosität bei 25 °C von höchstens 50 000 mPa·s besitzen.

Die erfindungsgemäßen Emulsionen zeichnen sich durch folgende Eigenschaften aus: Sie sind trotz des hohen Siloxangehaltes leicht fließfähig und relativ niederviskos, gut mit Wasser verdünnbar und bilden dann stabile Folgemulsionen; sie sind sowohl in konzentrierter als auch in verdünnter Form gut lagerstabil. Als gut fließfähig werden Emulsionen bezeichnet, deren Viskosität bei 25 °C höchstens 50 000, insbesondere höchstens 30 000 und bevorzugt höchstens 15 000 mPa.s beträgt.

Der pH-Wert der fertigen Emulsion liegt bei mindestens 7,5 und bevorzugt bei mindestens 8. Die erfindungsgemäßen Emulsionen weisen vorzugsweise eine enge Partikelgrößenverteilung auf. Die mittleren Partikelgrößen liegen vorzugsweise im Bereich von 10 bis 500 nm, insbesondere bei 10 bis 300 nm. Hergestellt werden diese Emulsionen vorzugsweise mit den üblichen Emulgierapparaten (z.B. Kolloidmühle, Hochgeschwindigkeitsrührer/Dissolver, Rotor-/ Stator-Dispergiermaschinen, Ultraschallgeräte und Hochdruckhomogenisatoren) in kontinuierlicher oder diskontinuierlicher (Batch) Fahrweise. Häufig wird die Batchweise Herstellung in einem gerührten Kessel, der als Scherwerkzeug einen Rotor-Stator-Homogenisator im Kessel (z.B. Typ UMA 9/50 von Fa. IKA-Werke, D-79219 Staufen) oder außerhalb des Rührkessels in einer Umpumpleitung (z.B. DISHO S-160-85 der Fa. Koruma, D-79359 Neuenburg) besitzt. Gegebenenfalls kann in die Umpumpleitung eine zusätzliche Förderpumpe zur Druckerhöhung gegebenenfalls mit Druckregulierung sowie zur Förderung hochviskoser Zwischen- oder Endprodukte eingebaut werden.

Die erfindungsgemäßen Emulsionen weisen gegenüber bekannten Siloxanemulsionen, bei denen z.B. typischerweise 50 % der in Form von Aminoethylaminopropylresten vorliegenden Aminogruppen im Silicon durch Säure protoniert vorliegen, eine vergleichbare Lagerstabilität auf, und besitzen jedoch eine wesentlich niedrigere Viskosität bei gleichzeitig verbesserter Löslichkeit. Ein weiterer Vorteil ist, dass daraus hergestellte Verdünnungen mit z.B. 10 % Festgehalt, auch nach 2 Wochen Lagerung bei 50°C stabil sind.
Nicht erfindungsgemäße essigsäurehaltige Emulsionen-Konzentrate werden unter diesen Lagerbedingungen standfest und somit unbrauchbar.

Ferner ist die Stabilität der aus erfindungsgemäßen Emulsionen hergestellten, ohne oder nur mit geringer Scherung verdünnten Verdünnungen höher als die direkt bei der Emulsionsherstellung auf den Festgehalt des Endprodukts verdünnten Emulsionen. Dies trifft auch bei erhöhter Temperatur z.B. im Bereich von 35 - 50 °C zu. Es wurde auch überraschend gefunden, dass erfindungsgemäße Emulsionen, die ohne oder nur mit geringer Scherung verdünnt werden, insbesondere nur durch Schütteln bzw. mit einem langsam laufenden Rührer, nach der Verdünnung eine engere Teilchengrößenverteilung aufweisen als solche direkt bei der Emulsionsherstellung auf den Festgehalt des Endprodukts verdünnten Emulsionen.

Die Erfindung betrifft auch ein Verfahren zur Herstellung von Emulsionen mit enger Teilchengrößenverteilung, bei dem erfindungsgemäße hochkonzentrierte Emulsionen ohne oder nur mit geringer Scherung verdünnt werden. Vorzugsweise beträgt die Scherung maximal 100·1/sec, insbesondere maximal 50·1/sec.

Vorzugsweise sind in den erfindungsgemäßen Emulsionen höchstens 20 %, besonders bevorzugt höchstens 10 %, insbesondere höchstens 5 % der Gruppen, die das Element N enthalten, protoniert. Insbesondere liegen keine protonierten Gruppen vor; die das Element N enthalten.

Organopolysiloxan (A) ist vorzugsweise bei 25°C flüssig und weist vorzugsweise Viskositäten von 0,5 bis 500 000 mPa·s, insbesondere 2 bis 80 000 mPa·s auf.

Organopolysiloxane (A) sind vorzugsweise aus Einheiten der allgemeinen Formel I 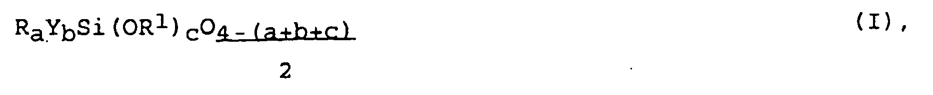 aufgebaut, worin
- R: Wasserstoffatom oder einen einwertigen organischen Rest, der Elemente enthält, die ausgewählt werden aus O, C und H,
- R¹: Wasserstoffatom, einen Alkylrest oder einen Alkoxyalkylrest,
- Y: einen einwertigen, SiC-gebundenen Rest, der Elemente enthält, die ausgewählt werden aus O, C und H, und zusätzlich das Element N enthält,
- a: 0, 1, 2 oder 3,
- b: 0, 1, oder 2 und
- c: 0, 1, 2 oder 3 bedeuten,
mit der Maßgabe, daß die Summe aus a, b und c in den Einheiten der allgemeinen Formel (I) kleiner oder gleich 3 ist und pro Molekül mindestens ein Rest Y enthaltend ist.

Beim Rest R handelt es sich vorzugsweise um einwertige Kohlenwasserstoffreste mit 1 bis 18 Kohlenstoffatom(en).

Beispiel für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylrest, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest, Cycloalkylreste, wie Cyclopentyl-, Cyclohexyl-, Cycloheptylreste und Methylcyclohexylreste, Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest, wobei der Methylrest, Ethylrest, n-Propylrest, Iso-Propylrest und n-Butylrest bevorzugt sind und der Methylrest besonders bevorzugt ist.

Beim Rest R¹ handelt es sich vorzugsweise um Alkylreste mit 1 bis 4 Kohlenstoffatom(en). Bespiele für Alkylreste R¹ sind der Methyl-, Ethyl-, n-Propyl-, iso-Propyl-, n-Butyl-, iso-Butyl-und tert.-Butylrest, wobei der Methyl- und Ethylrest bevorzugt sind.
Beispiele für Alkoxyalkylreste sind der Methoxyethyl- und der Ethoxyethylrest.

Bevorzugte Beipiele für die Reste Y sind solche der allgemeinen Formel II

R²₂NR³(-NR²-R³)ₓ- (II),

worin
- **x**: 0 oder eine ganze Zahl von 1 bis 10,
- **R**^{**2**}: Wasserstoff, einen Alkylrest, Cycloalkylrest oder einen Rest der Formeln -C(=O)-R oder -CH₂-CH₂-C(=O)-O-R und
- **R**^{**3**}: einen zweiwertigen Kohlenwasserstoffrest mit 1 bis 12 Kohlenstoffatomen je Rest bedeuten und
- **R**: die oben dafür angegebene Bedeutung hat.

Die Beispiele für Alkyl- und Cycloalkylrest **R** gelten in vollem Umfang auch für Alkyl- bzw. Cycloalkylreste **R**^{**2**}.

Vorzugsweise ist an jedes Stickstoffatom in den Resten der allgemeinen Formel (II) mindestens ein Wasserstoffatom gebunden.

Beispiele für Reste **R**^{**3**} sind der Methylen-, Ethylen-, Propylen-, Butylen-, Cyclohexylen-, Octadecylen-, Phenylen- und Butenylenrest, wobei, insbesondere wegen der leichten Zugänglichkeit, der n-Propylenrest bevorzugt ist.

Beispiele für Reste Y sind:
H₂N(CH₂)₃-
H₂N(CH₂)₂ NH(CH₂)₃-
H₂N(CH₂)₂-
H₃CNH(CH₂)₃-
H₂N(CH₂)₄-
H₂N(CH₂)₅-
H(NHCH₂CH₂)₃-
C₄H₉NH(CH₂)₂NH(CH₂)₂- und
cyclo-C₆H₁₁NH(CH₂)₃- ,
wobei H₂N(CH₂)₂NH(CH₂)₃- besonders bevorzugt ist.

Der durchschnittliche Wert von a beträgt vorzugsweise 1,66 bis 1,99, besonders bevorzugt 1,40 bis 1,96. Der durchschnittliche Wert von b beträgt vorzugsweise 0,01 bis 0,25, besonders bevorzugt 0,02 bis 0,17. Der durchschnittliche Wert von c beträgt vorzugsweise 0 bis 0,63, besonders bevorzugt 0 bis 0,45.

Die Organopolysiloxane (A) weisen das Element N vorzugsweise in Mengen von 0,01 bis 8 Gew.-%, bevorzugt von 0,1 bis 2,8 Gew.-%, besonders bevorzugt von 0,2 bis 2,1 Gew.-%, jeweils bezogen auf das Gesamtgewicht des Organopolysiloxans (A), auf.

Bevorzugte Organopolysiloxane (A) sind solche der allgemeinen Formel IV

Y_{g}R₃-gSiO(SiR₂O)ₘ(SiRYO)ₙSiR₃-_{g}Y_{g} (IV),

wobei
- g: 0, 1 oder 2,
- m: 0 oder eine ganze Zahl von 1 bis 1000 und
- n: 0 oder eine ganze Zahl von 1 bis 500 bedeuten und
- R und Y: die oben dafür angegebenn Bedeutungen haben,
mit der Maßgabe, daß mindestens ein Rest Y je Molekül enthalten ist und die m-Einheiten (SiR₂O) und die n-Einheiten (SiRYO) beliebig im Molekül verteilt sein können.

Bei den Organopolysiloxanen (A) aus Einheiten der Formel (I) handelt es sich besonders bevorzugt um im wesentlichen lineare Organopolysiloxane mit einem Verhältnis von Diorganosiloxaneinheiten (SiR₂O) zu Diorganosiloxyeinheiten (SiRYO) von vorzugsweise 1000 : 1 bis 2 : 1, besonders bevorzugt 500 : 1 bis 10 : 1, insbesondere von 300 : 1 bis 15 : 1.

Bei dem Bestandteil (B) der erfindungsgemäßen Emulsionen handelt es sich um kommerziell erwerbbare und gut untersuchte Emulgatoren, wie z.B. Sorbitanester von Fettsäuren mit 10 bis 22 Kohlenstoffatomen; Polyoxyethylensorbitanestern von Fettsäuren mit 10 bis 22 Kohlenstoffatomen und bis zu 35 Prozent Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95 Prozent Ethylenoxidgehalt; Fettamino- und Amidobetaine mit 10 bis 22 Kohlenstoffatomen; Polyoxyethylenkondensate von Fettsäuren oder Fettalkoholen mit 8 bis 22 Kohlenstoffatomen mit bis zu 95 Prozent Ethylenoxidgehalt; ionische Emulgatoren, wie Alkylarylsulfonate mit 6 bis 20 Kohlenstoffatomen in der Alkylgruppe; Fettsäureseifen mit 8 bis 22 Kohlenstoffatomen; Fettsulfate mit 8 bis 22 Kohlenstoffatome; Alkylsulfonate mit 10 bis 22 Kohlenstoffatomen; Alkalimetallsalze von Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Emulgatoren, wie Fettammoniumverbindungen mit 10 bis 22 Kohlenstoffatomen; Fettmorpholinoxide mit 10 bis 22 Kohlenstoffatomen; Alkalimetallsalze von carboxylierten, ethoxylierten Alkoholen mit 10 bis 22 Kohlenstoffatomen und bis zu 95 Prozent Ethylenoxid; Ethylenoxidkondensate von Fettsäuremonoestern des Glycerins mit 10 bis 22 Kohlenstoffatomen und bis zu 95 Prozent Ethylenoxid; Mono- oder Diethanolamide von Fettsäuren mit 10 bis 22 Kohlenstoffatomen; alkoxylierte Silicon-Emulgatoren mit Ethylenoxid- und oder Propylenoxideinheiten; Phosphatester.

Wie auf dem Gebiet der Emulgatoren wohl bekannt, können die Gegenionen im Falle von anionischen Emulgatoren Alkalimetalle, Ammoniak oder substituierte Amine, wie Trimethylamin oder Triethanolamin, sein. Normalerweise sind Ammonium-, Natrium-und Kaliumionen bevorzugt. Im Falle von kationische Emulgatoren ist das Gegenion ein Halogenid, Sulfat oder Methylsulfat. Chloride sind die zumeist industriell verfügbaren Verbindungen.

Die obengenannten Fettstrukturen stellen üblicherweise die lipophile Hälfte der Emulgatoren dar. Eine übliche Fettgruppe ist eine Alkylgruppe natürlichen oder synthetischen Ursprungs. Bekannte ungesättigte Gruppen sind die Oleyl-, Linoleyl-, Decenyl-, Hexadecenyl- und Dodecenylreste. Alkylgruppen können dabei cyclisch, linear oder verzweigt sein.
Andere mögliche Emulgatoren sind Sorbitolmonolaurat-Ethylenoxidkondensate; Sorbitolmonomyristat-Ethylenoxidkondensate; Sorbitolmonostearat-Ethylenoxidkondensate; Dodecylphenol-Ethylenoxidkondensate; Myristylphenol-Ethylenoxidkondensate; Octylphenyl-Ethylenoxidkondensate; Stearylphenol-Ethylenoxidkondensate; Laurylakohol-Ethylenoxidkondensate; Stearylalkohol-Ethylenoxidkondensate; Decylaminobetain; Cocoamidsulfobetain; Olylamidobetain; Cocoimidazolin; Cocosulfoimidazolin; Cetylimidazolin; 1-Hydroxyethyl-2-heptadecenyl-imidazolin; n-Cocomorpholinoxid; Decyldimethylaminoxid; Cocoamidodimethylaminoxid; Sorbitantristearat mit kondensierten Ethylenoxidgruppen; Sorbitantrioleat mit kondensierten Ethylenoxidgruppen; Natrium- oder Kaliumdodecylsulfat; Natrium-oder Kaliumstearylsulfat; Natrium- oder Kaliumdodecylbenzolsulfonat; Natrium- oder Kaliumstearylsulfonat; Triethanolaminsalz des Dodecylsulfates; Trimethyldodecylammoniumchlorid; trimethylstearylammoniummethosulfat; Natriumlaurat; Natrium-oder Kaliummyristat.

Bevorzugt sind die nicht ionischen Emulgatoren.
Der Bestandteil (B) kann aus einem o.g. Emulgatoren oder aus einem Gemisch zweier oder mehrerer o.g. Emulgatoren bestehen.

Die erfindungsgemäßen Emulsionen enthalten.Emulgator (B) in Mengen von vorzugsweise 1 bis 60 Gew.-%, besonders bevorzugt 5 bis 30 Gew.-%, jeweils bezogen auf das Gesamtgewicht an Organopolysiloxan (A).

Die erfindungsgemäßen Emulsionen können weiterhin als Bestandteil (D) weitere Organosiliciumverbindungen aufweisen. Beispiele für Organosiliciumverbindungen (D) sind Silane, Siliconöle die keine Elemente N und S enthalten und Siliconharze.

Beispiele für Silane (D) sind Vinyltris(methoxyethoxy)silan, Tetraethoxysilan, Methyltriethoxysilan, anhydrolysiertes Methyltriethoxysilan, Aminoethylaminopropyltrimethoxysilan, Aminoethylaminopropyl(methyl)dimethoxysilan.

Als Siliconöle (D) kommen alle flüssigen Silicone in Frage, die keine Elemente N und S enthalten, die substituiert oder nicht substituiert sind und Viskositäten von 0,5 bis 500 000 mPa·s, insbesondere 0,5 bis 80 000 mPa·s bei 25°C aufweisen.

Ferner können auch Siliconharze (D), wie z.B. Methylsiliconharze oder Methyl-/dimethyl-siliconharze oder Phenylsiliconharze zuemulgiert werden. Des weiteren sind Mischungen aus diesen 3 vorgenannten Organosiliciumverbindungen (D) möglich, die dann als Gemisch in unterschiedlichen Zusammensetzungen emulgiert werden.

Die erfindungsgemäßen Emulsionen enthalten Organosiliciumverbindungen (D) in Mengen von vorzugsweise 0 bis 75 Gew.-%, besonders bevorzugt 0 bis 40 Gew.-%, ganz besonders bevorzugt von 0 bis 10 Gew.% jeweils bezogen auf das Gesamtgewicht an Organopolysiloxan (A).

Die erfindungsgemäßen Emulsionen liegen in wasserverdünnbarer Form vor. Die erfindungsgemäßen Emulsionen werden typischerweise verdünnt angewendet, z.B. mit anderen wässrigen Produkten vermischt und/oder sie gelangen nach Verdünnung mit Wasser zur Anwendung.

Darüber hinaus können die erfindungsgemäßen Emulsionen für alle Anwendungen eingesetzt werden, bei denen auch bisher Organopolysiloxane (A) in wasseremulgierter Form verwendet wurden.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Temperaturen 20°C und alle Drücke 1013 hPa (abs.). Alle Viskositäten werden bei 25°C bestimmt.

### Beispiele

In den Beispielen werden die in Tabelle 1 aufgeführten Rohstoffe eingesetzt:

**Tabelle 1**

| **Rohstoff** | **Beschreibung** |
|---|---|
| AK 350 | Polydimethylsiloxan-Öl mit Trimethylsilyl-Endgruppen, Viskosität bei 25 °C: 350 mm²/s. |
| Aminöl 1 | Polydimethylsiloxan-Öl mit Aminoethylaminopropyl-Seitengruppen. Viskosität: 4000 mPas; Aminzahl: 0,14 |
| AP 500 | Polydimethylsiloxan-Öl mit Trimethylsilyl-Endgruppen, in der Kette teilweise phenyl-substituiert. Viskosität: 500 mPas |
| Aminöl 2 | Polydimethylsiloxan-Öl mit ca. 130 Dimethylsiloxy-Einheiten. Endgruppen: Aminopropyldimethylsiloxy. |
| | Alle oben beschriebenen Silicon-Produkte sind bei der Wacker-Chemie GmbH erhältlich. |
| VE-Wasser | Vollentsalztes Wasser |
| IT 10/80 | Isotridecylalkohol-polyethylenglykolether (10 E0-Einheiten), 80 %ig in Wasser.: Lutensol® TO 108 der BASF AG. |
| IT 5 | Isotridecylalkohol-polyethylenglykolether (5 E0-Einheiten). Lutensol® TO 5 der BASF AG. |

Die erfindungsgemäßen O/W-Emulsionen X 610, H 601/1 und K 793 werden durch Vermischen der Rohstoffe von Tabelle 1 hergestellt, wobei Geräte nach dem Stand der Technik (z.B. schnell-laufender Dissolver) verwendet werden. Bei der Herstellung wird eine sogenannte steife Phase durchlaufen.

Nicht erfindungsgemäß sind die Beispiele X 608, H 601/2 sowie VS 204.

Teilchengrößenverteilung: Anhand der Beispiele X 610 und K 793 wird demonstriert, dass die erfindungsgemäß hergestellte verdünnte Emulsion eine engere Teilchengrößenverteilung als die mit Scherung hergestellte Verdünnungen, z.B. aus X 610 (39,9 % Gesamt-Festgehalt) oder die Verdünnung aus K 793 (35,0 Silicongehalt) hat.

Lagerstabilität: K 793 ist niederviskos. Wird Essigsäure zugegeben (Tabelle 5), so steigt die Viskosität der Emulsion sofort an. K 793 ist nach 2 Wochen Lagerung bei 50°C weiterhin dünnflüssig, während VS 204/4 (nicht erfindungsgemäß, enthält pro Mol Amin 0,5 Mol Essigsäure), das nach Herstellung hochviskos ist, standfest und somit unbrauchbar ist.

**Tabelle 2: Rezepturen X 608 und X 610:**

| | X 608 | | X 610 | |
|---|---|---|---|---|
| Einsatzstoffe | Menge [ g ] | % | Menge [ g ] | % |
| IT 10/80 | 35,00 | 5,0 | 35,00 | 5,7 |
| IT 5 | 20,00 | 2,8 | 20,00 | 3,3 |
| Aminöl 1 | 354,00 | 50,2 | 354,00 | 57,9 |
| VE-Wasser | 294,00 | 41,7 | 202,00 | 33,1 |
| Essigsäure, 80% | 1,70 | 0,2 | 0,00 | 0,0 |
| Gesamt | 704,70 | 100,0 | 611,00 | 100 |

**Tabelle 3**

| Ergebnis | X 608 | X 608 verdünnt | X 610 | X 610 verdünnt |
|---|---|---|---|---|
| Festgehalt in % | 56,6 | 38,0 | 67,09 | 39,9 |
| Teilchengröße in nm | 148 | 170 | 209 | 228 |
| Teilchengrößen-verteilung | eng | breit | eng | breit |
| Viskosität in mPa·s (25°C) ; Brookfield Spindel 2, 2,5 1/min | standfest | - - | 1230 | - - |
| pH | 6,0 | - - | 8,5 | - - |

Die hochkonzentrierten Emulsionen wurden am Dissolver unter Scherung zu verdünnten Emulsionen verdünnt.

**Tabelle 4: Rezeptur K 793:**

| Einsatz-stoffe | Menge [ g ] | % |
|---|---|---|
| IT 10/80 | 5,40 | 9,0 |
| Aminöl 1 | 33,00 | 55,0 |
| VE-Wasser | 21,50 | 35,8 |
| Konservierer CB | 0,12 | 0,2 |
| | | 0,0 |
| Gesamt | 60,02 | 100,0 |

**Tabelle 5: Rezeptur VS 204 (hergestellt aus K 793 mit Essigsäure-Zusatz) und Ergebnisse:**

| | Mengen an K 793 + Essigsäure | Viskosität (25°C) Brookfield Spindel2; 2,5 1/min | Teilchengröße |
|---|---|---|---|
| Versuchsnummer | Menge [ g ] | (mPa·s) | (nm) |
| K 793 | 450 + 0 | 1400 | 205 |
| VS 204/2 | 450 + 0,12 | 10625 | 202 |
| VS 204/3 | 450 + 0,58 | 21250 | 184 |
| VS 204/4 | 450 + 1,16 | 21750 | 138 |

**Tabelle 6: Rezepturen H 601/1 und H 601/2:**

| | H 601/1 | | H 601/2 | |
|---|---|---|---|---|
| Einsatzstoffe | Menge [ g ] | % | Menge [ g ] | % |
| IT 10/80 | 54,00 | 8,7 | 54,00 | 8,7 |
| Aminöl 2 | 330,00 | 53,2 | 330,00 | 53,2 |
| VE-Wasser | 236,00 | 38,1 | 232,00 | 37,4 |
| Essigsäure, 80% | 0,00 | 0,0 | 4,00 | 0,6 |
| Gesamt | 620,00 | 100,0 | 620,00 | 100,0 |

**Tabelle 7: Ergebnisse H 601/1 und H 601/2:**

| Ergebnis | H 601/1 (ohne Essigsäure) | H 601/2 (mit Essigsäure) |
|---|---|---|
| Festgehalt in % | 60,2 | 60,2 |
| Partikelgröße in nm | 172 | 147 |
| Viskosität bei 25°C in mPa·s (Brookfield, Spindel 2) | 1.100 | 76.500 |
| pH | 9,0 | 4,5 |

## Patentansprüche

1. Hochkonzentrierte Öl-in-Wasser-Emulsionen von Organopolysiloxanen, welche
(A) mindestens 45 Gew.-% Organopolysiloxan, das neben den Elementen Si, O, C, H auch das Element N enthält,
(B) Emulgator und
(C) Wasser enthalten,
wobei die hochkonzentrierten Emulsionen einen pH-Wert von mindestens 7,5 und eine Viskosität bei 25 °C von höchstens 50 000 mPa·s besitzen.

2. Emulsionen nach Anspruch 1, bei denen die Organopolysiloxane (A) aus Einheiten der allgemeinen Formel I 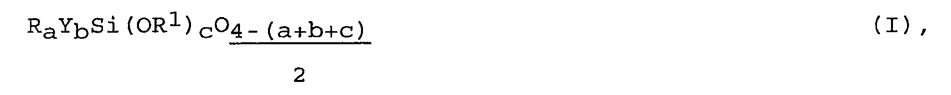 aufgebaut sind, worin
R Wasserstoffatom oder einen einwertigen organischen Rest, der Elemente enthält, die ausgewählt werden aus O, C und H,
R¹ Wasserstoffatom, einen Alkylrest oder einen Alkoxyalkylrest,
Y einen einwertigen, SiC-gebundenen Rest, der Elemente enthält, die ausgewählt werden aus O, C und H, und zusätzlich das Element N enthält,
a 0, 1, 2 oder 3,
b 0, 1, oder 2 und
c 0, 1, 2 oder 3 bedeuten,
mit der Maßgabe, daß die Summe aus a, b und c in den Einheiten der allgemeinen Formel (I) kleiner oder gleich 3 ist und pro Molekül mindestens ein Rest Y enthaltend ist.

3. Emulsionen nach Anspruch 2, bei denen die Reste Y solche der allgemeinen Formel II
R²₂NR³(-NR²-R³)ₓ- (II),
sind, worin
**x** 0 oder eine ganze Zahl von 1 bis 10,
**R**^{**2**} Wasserstoff, einen Alkylrest, Cycloalkylrest oder einen Rest der Formeln -C(=O)-R oder -CH₂-CH₂-C(=O)-O-R und
**R**^{**3**} einen zweiwertigen Kohlenwasserstoffrest mit 1 bis 12 Kohlenstoffatomen je Rest bedeuten und
**R** die oben dafür angegebene Bedeutung hat.

4. Emulsionen nach Anspruch 1 bis 3, bei denen die Emulgatoren (B) nicht ionische Emulgatoren sind.

5. Emulsionen nach Anspruch 1 bis 4, welche Emulgator (B) in Mengen von 1 bis 60 Gew.-%, bezogen auf das Gesamtgewicht an Organopolysiloxan (A) enthalten.

6. Emulsionen nach Anspruch 1 bis 5, welche als Bestandteil (D) weitere Organosiliciumverbindungen aufweisen.

7. Emulsionen nach Anspruch 6, bei denen die Organosiliciumverbindungen (D) ausgewählt werden aus Silanen, Siliconölen die kein Element N enthalten und Siliconharzen.

8. Verfahren zur Herstellung von Emulsionen mit enger Teilchengrößenverteilung, bei dem hochkonzentrierte Öl-in-Wasser-Emulsionen von Organopolysiloxanen, welche
(A) mindestens 45 Gew.-% Organopolysiloxan, das neben den Elementen Si, O, C, H auch das Element N enthält,
(B) Emulgator und
(C) Wasser enthalten,
wobei die hochkonzentrierten Emulsionen einen pH-Wert von mindestens 7,5 und eine Viskosität bei 25 °C von höchstens 50 000 mPa·s besitzen,
ohne oder nur mit geringer Scherung verdünnt werden.

## Claims

1. Highly concentrated oil-in-water emulsions of organopolysiloxanes, which contain
(A) at least 45% by weight of organopolysiloxane which, in addition to the elements Si, O, C and H, also contains the element N,
(B) emulsifier and
(C) water,
the highly concentrated emulsion having a pH of at least 7.5 and a viscosity at 25°C of not more than 50 000 mPa·s.

2. Emulsions according to claim 1, in which the organopolysiloxanes (A) are composed of units of the general formula I 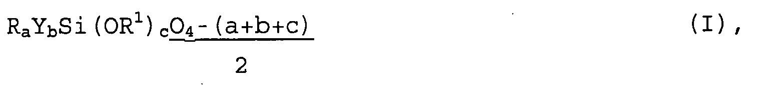 in which
R is a hydrogen atom or a monovalent organic radical which contains elements which are selected from O, C and H,
R¹ is a hydrogen atom, an alkyl radical or an alkoxyalkyl radical,
Y is a monovalent, SiC-bonded radical which contains elements which are selected from O, C and H and additionally contains the element N,
a is 0, 1, 2 or 3,
b is 0, 1 or 2 and
c is 0, 1, 2 or 3,
with the proviso that the sum of a, b and c in the units of the general formula (I) is less than or equal to 3 and at least one radical Y is contained per molecule.

3. Emulsion according to claim 2, in which the radicals Y are those of the general formula II
R²₂NR³(-NR²-R³)ₓ- (II),
in which
x is 0 or an integer from 1 to 10,
R² is hydrogen, an alkyl radical, a cycloalkyl radical or a radical of the formulae -C(=O)-R or -CH₂-CH₂-C(=O)-O-R and
R³ is a divalent hydrocarbon radical having 1 to 12 carbon atoms per radical and
R has the meaning mentioned above therefor.

4. Emulsions according to any of claims 1 to 3, in which the emulsifiers (B) are nonionic emulsifiers.

5. Emulsions according to any of claims 1 to 4, which contain emulsifier (B) in amounts of from 1 to 60% by weight, based on the total weight of organopolysiloxane (A).

6. Emulsions according to any of claims 1 to 5, which have further organosilicon compounds as component (D).

7. Emulsion according to claim 6, in which the organosilicon compounds (D) are selected from silanes, silicone oils which contain no element N and silicone resins.

8. Process for the preparation of emulsions having a narrow particle size distribution, in which highly concentrated oil-in-water emulsions of organopolysiloxanes which contain
(A) at least 45% by weight of organopolysiloxane which, in addition to the elements Si, O, C and H, also contains the element N,
(B) emulsifier and
(C) water,
the highly concentrated emulsions having a pH of at least 7.5 and a viscosity at 25°C of not more than 50 000 mPa·s, are diluted without or only with slight shearing.

## Revendications

1. Emulsions huile-dans-eau hautement concentrées d'organopolysiloxanes, qui contiennent
(A) au moins 45% en poids d'organopolysiloxane, qui contient, outre les éléments Si, O, C, H, également l'élément N
(B) un émulsifiant et
(C) de l'eau,
les émulsions hautement concentrées présentant un pH d'au moins 7,5 et une viscosité à 25°C d'au maximum 50 000 mPa.s.

2. Emulsions selon la revendication 1, dans lesquelles les organopolysiloxanes (A) sont constitués par des unités de formule générale I 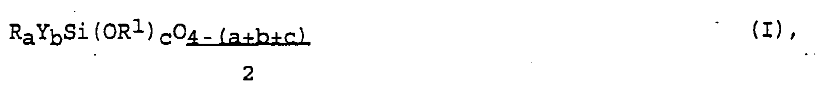 dans laquelle
R signifie un atome d'hydrogène ou un radical organique monovalent, qui contient des éléments qui sont choisis parmi O, C et H,
R¹ signifie un atome d'hydrogène, un radical alkyle ou un radical alcoxyalkyle,
Y signifie un radical monovalent, lié par SiC, qui contient des éléments qui sont choisis parmi O, C et H, et qui contient en outre l'élément N,
a vaut 0, 1, 2 ou 3,
b vaut 0, 1, ou 2 et
c vaut 0, 1, 2 ou 3,
à condition que la somme de a, b et c dans les unités de formule générale (I) soit inférieure ou égale à 3 et qu'au moins un radical Y soit contenu par molécule.

3. Emulsions selon la revendication 2, dans lesquelles les radicaux Y sont des radicaux de formule générale II
R²₂NR³(-NR²-R³)ₓ- (II),
dans laquelle
x vaut 0 ou un nombre entier de 1 à 10,
R² signifie hydrogène, un radical alkyle, un radical cycloalkyle ou un radical des formules -C(=O)-R ou -CH₂-CH₂-C(=O)-O-R et
R³ signifie un radical hydrocarboné divalent comprenant 1 à 12 atomes de carbone par radical et
R a la signification susmentionnée.

4. Emulsions selon la revendication 1 à 3, dans lesquelles les émulsifiants (B) sont des émulsifiants non ioniques.

5. Emulsions selon la revendication 1 à 4, qui contiennent l'émulsifiant (B) en des quantités de 1 à 60% en poids, par rapport au poids total d'organopolysiloxane (A).

6. Emulsions selon la revendication 1 à 5, qui présentent comme constituant (D) d'autres composés organosiliciés.

7. Emulsions selon la revendication 6, dans lesquelles les composés organosiliciés (D) sont choisis parmi les silanes, les huiles de silicone qui ne contiennent pas d'élément N et les résines de silicone.

8. Procédé pour la préparation d'émulsions avec une répartition étroite de la taille des particules, dans lequel des émulsions huile-dans-eau hautement concentrées d'organopolysiloxanes, qui contiennent
(A) au moins 45% en poids d'organopolysiloxane, qui contient, outre les éléments Si, O, C, H, également l'élément N,
(B) un émulsifiant et
(C) de l'eau,
les émulsions hautement concentrées présentant un pH d'au moins 7,5 et une viscosité à 25°C d'au maximum 50 000 mPa.s
sont diluées sans cisaillement ou seulement avec un faible cisaillement.
